# EUROPÄISCHE PATENTSCHRIFT

(11) **EP 4 147 286 B1**
(45) Veröffentlichungstag und Bekanntmachung des Hinweises auf die Patenterteilung: **20.11.2024**
(21) Anmeldenummer: 21722377.5
(22) Anmeldetag: 16.04.2021
(51) Int. Cl.: H01M 8/0202, H01M 8/021

(54) **SCHICHTSYSTEM, BIPOLARPLATTE MIT EINEM SOLCHEN SCHICHTSYSTEM SOWIE BRENNSTOFFZELLE, ELEKTROLYSEUR ODER REDOX-FLOW-ZELLE**
LAYER SYSTEM, FLOW FIELD PLATE HAVING A LAYER SYSTEM OF THIS TYPE, AND FUEL CELL, ELECTROLYZER OR REDOX FLOW CELL
SYSTÈME STRATIFIÉ, PLAQUE BIPOLAIRE DOTÉE D'UN TEL SYSTÈME STRATIFIÉ, AINSI QUE PILE À COMBUSTIBLE, ÉLECTROLYSEUR OU CELLULE REDOX

(30) Priorität: 06.05.2020 DE 102020112252
(43) Veröffentlichungstag der Anmeldung: 15.03.2023
(73) Patentinhaber: Schaeffler Technologies AG & Co. KG, 91074 Herzogenaurach (DE)
(72) Erfinder: WEGENER, Moritz, 91058 Erlangen (DE); BAGCIVAN, Nazlim, 90480 Nürnberg (DE); SCHULZ, Edgar, 91094 Langensendelbach (DE); DOBRENIZKI, Ladislaus, 91315 Höchstadt (DE); STUMPF, Jan Martin, 91058 Erlangen (DE); BAECHSTAEDT, Romina, 91056 Niederndorf-Herzogenaurach (DE); VIVEKANANTHAN, Jeevanthi, 91074 Herzogenaurach (DE)
(86) Internationale Anmeldenummer: PCT/DE2021/100347
(87) Internationale Veröffentlichungsnummer: WO 2021/223798

(56) Entgegenhaltungen:
- CN-A- 106 920 977
- DE-A1- 102017 118 318
- US-A1- 2018 053 948

## Beschreibung

Die Erfindung betrifft ein Schichtsystem zum Beschichten eines metallischen Substrats zur Ausbildung einer Bipolarplatte, umfassend zumindest eine Deckschicht aus Metalloxid. Die Erfindung betrifft weiterhin eine Bipolarplatte umfassend ein metallisches Substrat und ein solches Schichtsystem. Weiterhin betrifft die Erfindung eine Brennstoffzelle, einen Elektrolyseur oder eine Redox-Flow-Zelle umfassend mindestens eine solche Bipolarplatte.

Aus der DE 100 58 337 A1 ist bereits eine Bipolarplatte für eine Brennstoffzelle oder einen Elektrolyseur bekannt, bei welcher auf mindestens einer Seite eines Blechs eine leitfähige und korrosionsbeständige Schutzbeschichtung aus einem Metalloxid gebildet ist. Das Metalloxid ist insbesondere aus einem Oxid der Elemente oder Legierungen aus der Gruppe umfassend Zinn, Zink, Indium gebildet.

Die US 2018 / 0 053 948 A1 beschreibt einen Separator für eine Polymerelektrolyt-Brennstoffzelle. Der Separator aus ferritischem Edelstahl ist mit einer Indium-Zinn-Oxid-Beschichtung versehen.

Die DE 10 2017 118 318 A1 beschreibt ein Verfahren zur Herstellung eines Brennstoffzellenstacks, der umfassend ein metallisches Massivbauteil ausgebildet wird. Das Massivbauteil ist aus einem Trägerbauteil mit einer zumindest partiellen Beschichtung gebildet, die in einem physikalischen und/oder chemischen Gasphasenabscheidungsverfahren gebildet wird. Die Beschichtung ist als ein zumindest zweischichtiges Schichtsystem ausgebildet umfassend mindestens eine Unterlagenschicht und eine Deckschicht umfassend Iridium oder Iridium und Ruthenium.

Die CN 106 920 977 A offenbart eine bipolare Metallplatte mit einer in einem Magnetron-Sputterverfahren gebildeten ITO- Schicht (In₂O₃:Sn = 90:10 Gew.-%) auf einer Niobschicht.

Es ist Aufgabe der Erfindung, ein verbessertes Schichtsystem für eine Bipolarplatte bereitzustellen und eine derartige Bipolarplatte bereitzustellen. Weiterhin ist es Aufgabe der Erfindung, eine Brennstoffzelle, einen Elektrolyseur oder eine Redox-Flow-Zelle mit mindestens einer solchen Bipolarplatte vorzuschlagen.

Die Aufgabe wird für das Schichtsystem zum Beschichten eines metallischen Substrats zur Ausbildung einer Bipolarplatte gelöst, wobei das Schichtsystem umfassend zumindest eine Deckschicht aus Metalloxid, mindestens eine die Deckschicht tragende Zwischenschicht und eine die Zwischenschicht(en) tragende Unterschicht ausgebildet ist, wobei die Deckschicht aus Indium-Zinn-Oxid (ITO: indium tin oxide) mit einem Indiumanteil im Bereich von 75 bis 85 Vol.-% gebildet ist, wobei das Indium-Zinn-Oxid optional mit mindestens einem Element aus der Gruppe umfassend Kohlenstoff, Stickstoff, Bor, Fluor, Wasserstoff, Silizium, Titan, Zirkon, dotiert ist, wobei die mindestens eine Zwischenschicht aus Titannitrid und/oder Titancarbid und/oder Titancarbonitrid und/oder Titanniobnitrid (TiNbN) und/oder Titanniobcarbid (TiNbC) und/oder Titanniobcarbonitrid (TiNbCN) und/oder Chromnitrid (CrN) und/oder Chromcarbid (CrC) und/oder Chromcarbonitrid (CrCN) gebildet ist, und wobei die Unterschicht aus Titan (Ti) oder einer Titan-Niob-Legierung (TiNb) oder Chrom (Cr) gebildet ist.

Das Schichtsystem zeichnet sich durch eine hohe Langzeitstabilität bei gleichzeitig hoher elektrischer Leitfähigkeit und geringen Kosten aus, das es ohne Edelmetall auskommt. Zudem gewährleistet das Schichtsystem einen ausgezeichneten Korrosionsschutz für ein metallisches Grundmaterial oder Substrat einer Bipolarplatte.

Das Schichtsystem ist dabei vorzugsweise durch ein PVD- oder ein CVD-Verfahren (PVD: Physical Vapour Depostion; CVD: Chemical Vapour Deposition) gebildet.

Besonders bevorzugt sind hierbei Deckschichten aus Indium-Zinn-Oxid, die einen Indiumanteil im Bereich von 75 bis 85 Vol.-% aufweisen und die eine hohe elektrische Leitfähigkeit aufweisen.

Die Unterschicht dient insbesondere als ein Haftvermittler zwischen einem metallischen Substrat und der mindestens einen Zwischenschicht. Weiterhin bildet die Unterschicht leitfähige Oxide aus und stellt damit einen galvanischen Korrosionsschutz für das metallische Substrat einer Bipolarplatte bereit. Die Unterschicht weist bevorzugt eine Schichtdicke im Bereich von 1 nm bis 300 nm auf.

Die Zwischenschicht dient insbesondere ebenfalls als ein Haftvermittler zwischen der Unterschicht und der Deckschicht. Weiterhin bildet auch die mindestens eine Zwischenschicht leitfähige Oxide aus und stellt damit einen galvanischen Korrosionsschutz für die Unterschicht und das metallische Substrat einer Bipolarplatte bereit. Die mindestens eine Zwischenschicht stellt zudem eine Barriere für Wasserstoff bereit, so dass dieser nicht in Richtung des metallischen Substrats vordringen und dieses Schädigen kann. Eine Schichtdicke einer einzelnen Zwischenschicht wird bevorzugt im Bereich von 0,1 bis 3,0 µm gewählt. Es können allerdings zwei oder mehr Zwischenschichten vorhanden sein.

Die Deckschicht schützt die Unterschicht und die Zwischenschicht(en) mechanisch sowie vor korrosivem Angriff. Die Deckschicht weist insbesondere eine Schichtdicke im Bereich von 0,01 bis 15 µm, insbesondere im Bereich von 0,1 bis 3 µm, auf.

Bevorzugt weist das erfindungsgemäße Schichtsystem umfassend die Unterschicht, die mindestens eine Zwischenschicht und die Deckschicht insgesamt eine Dicke im Bereich von 0,1 bis 20 µm auf.

Weiterhin hat es sich bewährt, wenn die Deckschicht aus Indium-Zinn-Oxid die Dotierung mit dem mindestens einen Element aus der Gruppe umfassend Kohlenstoff, Stickstoff, Bor, Fluor, Wasserstoff, Silizium, Titan, Zirkon, von maximal 35 at.-%, insbesondere im Bereich von 0,1 bis 10 at.-%, besonders bevorzugt im Bereich von 1 bis 5 at.-%, aufweist. Dabei wird das Dotierungselement oder die Dotierungselemente in das Oxidkristallgitter des Indium-Zinn-Oxids eingebaut.

Die Dotierung kann dabei gleichmäßig über die Schichtdicke der Deckschicht vorhanden sein. Alternativ kann die Menge an Dotierelement(en) in Richtung einer freien Oberfläche der Deckschicht zunehmen, so dass eine Gradientenschicht gebildet ist.

Auch kann ein Dotierelement oder können mehrere Dotierelemente lediglich in die freie Oberfläche der Deckschicht implantiert vorliegen.

Besonders bevorzugt ist dabei eine Dotierung der Deckschicht mit Kohlenstoff und/oder Silizium. Wasserstoff ist insbesondere lediglich in Spuren in der Deckschicht vorhanden.

Insbesondere haben sich folgende Schichtsysteme zum Beschichten eines metallischen Substrats, bevorzugt aus Stahl, insbesondere austenitischem Stahl oder austenitischem Edelstahl, zur Ausbildung einer Bipolarplatte als vorteilhaft erwiesen:

### Beispiel 1:

| | | |
|---|---|---|
| Unterschicht: | TiNb oder Ti | Schichtdicke: 100 nm |
| Zwischenschicht: | TiNbN | Schichtdicke: 300 nm |
| Deckschicht: | Indium-Zinn-Oxid mit 80 Vol.-% Indiumanteil | |
| | Schichtdicke: 100 nm | |

### Beispiel 2:

| | | |
|---|---|---|
| Unterschicht: | TiNb oder Ti | Schichtdicke: 100 nm |
| Zwischenschicht: | TiNbCN | Schichtdicke: 300 nm |
| Deckschicht: | Indium-Zinn-Oxid mit 80 Vol.-% Indiumanteil | |
| | Schichtdicke: 100 nm | |

### Beispiel 3: (nicht erfindungsgemäß)

| | | |
|---|---|---|
| Unterschicht: | TiNb oder Ti | Schichtdicke: 100 nm |
| 1. Zwischenschicht: | TiNbN | Schichtdicke: 200 nm |
| 2. Zwischenschicht: | TiNbCN | Schichtdicke: 200 nm |
| Deckschicht: | Indium-Zinn-Oxid mit 90 Vol.-% Indiumanteil | |
| | Schichtdicke : 100 nm | |

### Beispiel 4:

| | | |
|---|---|---|
| Unterschicht: | TiNb oder Ti | Schichtdicke: 100 nm |
| 1. Zwischenschicht: | TiNbCN | Schichtdicke: 200 nm |
| 2. Zwischenschicht: | TiNbN | Schichtdicke: 200 nm |
| Deckschicht: | Indium-Zinn-Oxid mit 80 Vol.-% Indiumanteil | |
| | Schichtdicke: 100 nm | |

### Beispiel 5:

| | | |
|---|---|---|
| Unterschicht: | TiNb oder Ti | Schichtdicke: 100 nm |
| Zwischenschicht: | TiN | Schichtdicke: 300 nm |
| Deckschicht: | Indium-Zinn-Oxid mit 80 Vol.-% Indiumanteil | |
| | Schichtdicke: 100 nm | |

### Beispiel 6:

| | | |
|---|---|---|
| Unterschicht: | TiNb oder Ti | Schichtdicke: 100 nm |
| Zwischenschicht: | TiC und/oder TiNbC | Schichtdicke: 300 nm |
| Deckschicht: | Indium-Zinn-Oxid mit 80 Vol.-% Indiumanteil | |
| | Schichtdicke: 100 nm | |

### Beispiel 7:

| | | |
|---|---|---|
| Unterschicht: | TiNb oder Ti | Schichtdicke: 100 nm |
| Zwischenschicht: | TiCN | Schichtdicke: 300 nm |
| Deckschicht: | Indium-Zinn-Oxid mit 80 Vol.-% Indiumanteil | |
| | Schichtdicke: 100 nm | |

### Beispiel 8:

| | | |
|---|---|---|
| Unterschicht: | Cr | Schichtdicke: 100 nm |
| Zwischenschicht: | CrN und/oder CrCN | Schichtdicke: 300 nm |
| Deckschicht: | Indium-Zinn-Oxid mit 80 Vol.-% Indiumanteil | |
| | Schichtdicke: 100 nm | |

### Beispiel 9:

| | | |
|---|---|---|
| Unterschicht: | Cr | Schichtdicke: 100 nm |
| Zwischenschicht: | CrC und/oder CrCN | Schichtdicke: 300 nm |
| Deckschicht: | Indium-Zinn-Oxid mit 80 Vol.-% Indiumanteil | |
| | Schichtdicke: 100 nm | |

Die Aufgabe wird für eine Bipolarplatte umfassend ein metallisches Substrat sowie ein erfindungsgemäßes Schichtsystem gelöst mit einem Aufbau der Bipolarplatte in der Reihenfolge:
metallisches Substrat,
Unterschicht,
Zwischenschicht(en),
Deckschicht.

Vorzugsweise handelt es sich hier um eine Bipolarplatte mit einem metallischen Substrat beziehungsweise einer metallischen Trägerplatte, bevorzugt aus Stahl, insbesondere aus austenitischem Stahl oder Edelstahl. Eine Trägerplatte kann dabei ein- oder mehrteilig ausgebildet sein.

Die Figuren 1 bis 3 sollen ein erfindungsgemäßes Schichtsystem sowie eine damit gebildete Bipolarplatte und eine Brennstoffzelle beispielhaft erläutern. So zeigt
- FIG 1: eine Bipolarplatte aufweisend das Schichtsystem;
- FIG 2: schematisch ein Brennstoffzellensystem umfassend mehrere Brennstoffzellen;
- FIG 3: einen Querschnitt durch ein beispielhaft dargestelltes Schichtsystem in vergrößerter Darstellung.

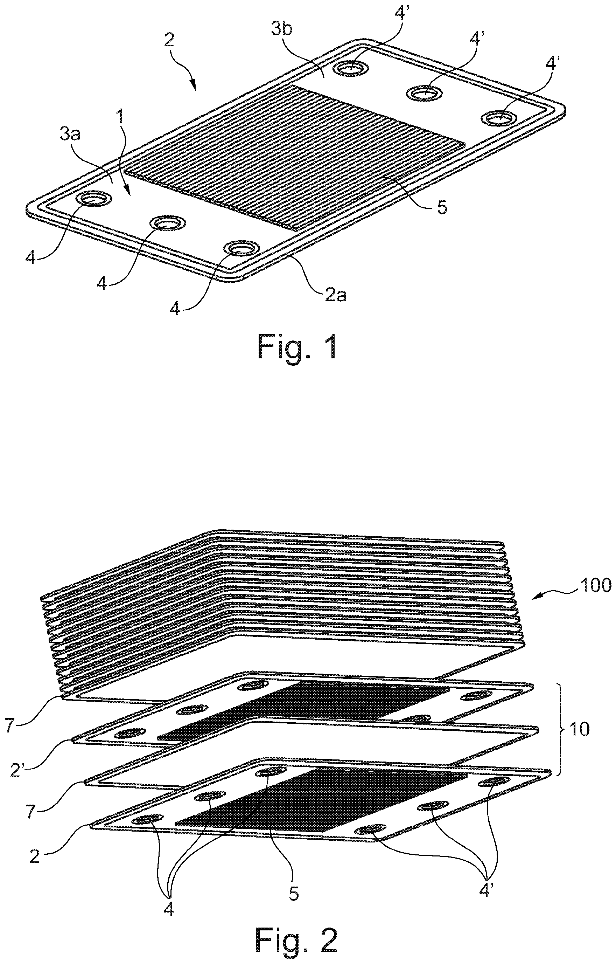

Figur 1 zeigt eine Bipolarplatte 2 mit einem Schichtsystem 1, die hier ein metallisches Substrat 2a beziehungsweise eine metallische Trägerplatte aus austenitischem Edelstahl aufweist. Die Bipolarplatte 2 weist einen Einströmbereich 3a mit Öffnungen 4 sowie einen Auslassbereich 3b mit weiteren Öffnungen 4' auf, die zur Versorgung einer Brennstoffzelle mit Prozessgasen und Abführung von Reaktionsprodukten aus der Brennstoffzelle dienen. Die Bipolarplatte 2 weist weiterhin auf jeder Seite eine Gasverteilerstruktur 5 auf, die zur Anlage an eine Polymerelektrolytmembrane 7 (vergleiche FIG 2) vorgesehen ist.

Figur 2 zeigt schematisch ein Brennstoffzellensystem 100 umfassend mehrere Brennstoffzellen 10. Jede Brennstoffzelle 10 umfasst eine Polymerelektrolytmembrane 7, die zu beiden Seiten von Bipolarplatten 2, 2' benachbart ist. Gleiche Bezugszeichen wie in FIG 1 kennzeichnen gleiche Elemente.

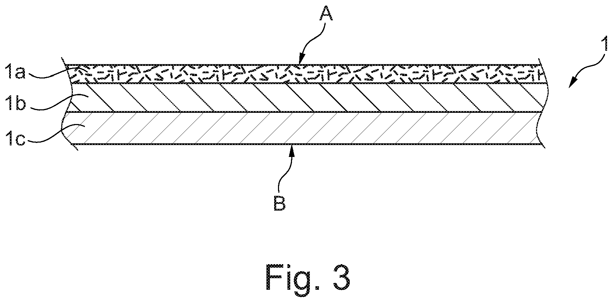

Figur 3 zeigt einen Querschnitt durch das Schichtsystem 1 gemäß Figur 1. Es ist erkennbar, dass eine Deckschicht 1a, eine Zwischenschicht 1b und eine Unterschicht 1c vorhanden sind. Die Unterschicht 1c befindet sich auf einer Seite B des Schichtsystems 1, welche dem Substrat 2a der Bipolarplatte 2 zugewandt angeordnet ist. Die Deckschicht 1a befindet sich auf einer Seite A des Schichtsystems 1, die dem Substrat 2a der Bipolarplatte 2 abgewandt angeordnet ist. Alternativ kann das Schichtsystem 1 auch mehrere Zwischenschichten 1b aufweisen.

### Bezugszeichenliste

- 1: Schichtsystem
- 1a: Deckschicht
- 1b: Zwischenschicht(en)
- 1c: Unterschicht
- 2, 2': Bipolarplatte
- 2a: metallisches Substrat
- 3a: Einströmbereich
- 3b: Auslassbereich
- 4, 4': Öffnung
- 5: Gasverteilerstruktur
- 7: Polymerelektrolytmembrane
- 10: Brennstoffzelle
- 100: Brennstoffzellensystem
- A: Seite des Schichtsystems 1, dem Substrat 2a abgewandt
- B: Seite des Schichtsystems 1, dem Substrat 2a zugewandt

## Patentansprüche

1. Schichtsystem (1) zum Beschichten eines metallischen Substrats (2a) zur Ausbildung einer Bipolarplatte (2, 2'), umfassend zumindest eine Deckschicht (1a) aus Metalloxid, mindestens eine die Deckschicht (1a) tragende Zwischenschicht (1b) und eine die Zwischenschicht(en) (1b) tragende Unterschicht (1c),
wobei die Deckschicht (1a) aus Indium-Zinn-Oxid mit einem Indiumanteil im Bereich von 75 bis 85 Vol.-% gebildet ist, wobei das Indium-Zinn-Oxid optional mit mindestens einem Element aus der Gruppe umfassend Kohlenstoff, Stickstoff, Bor, Fluor, Wasserstoff, Silizium, Titan, Zirkon, dotiert ist,
wobei die mindestens eine Zwischenschicht (1b) aus Titannitrid und/oder Titancarbid und/oder Titancarbonitrid und/oder Titanniobnitrid und/oder Titanniobcarbid und/oder Titanniobcarbonitrid und/oder Chromnitrid und/oder Chromcarbid und/oder Chromcarbonitrid gebildet ist, und
wobei die Unterschicht (1c) aus Titan oder einer Titan-Niob-Legierung oder Chrom gebildet ist.

2. Schichtsystem (1) nach Anspruch 1, wobei die Unterschicht (1c) eine Schichtdicke im Bereich von 1 nm bis 300 nm aufweist.

3. Schichtsystem (1) nach einem der vorhergehenden Ansprüche, wobei die mindestens eine Zwischenschicht (1b) eine Schichtdicke im Bereich von 0,1 µm bis 3,0 µm aufweist.

4. Schichtsystem (1) nach einem der vorhergehenden Ansprüche, wobei die Deckschicht (1a) eine Schichtdicke im Bereich von 0,01 µm bis 15 µm aufweist.

5. Schichtsystem (1) nach einem der vorhergehenden Ansprüche, wobei die Deckschicht (1a) aus Indium-Zinn-Oxid die Dotierung mit dem mindestens einen Element aus der Gruppe umfassend Kohlenstoff, Stickstoff, Bor, Fluor, Wasserstoff, Silizium, Titan, Zirkon, von maximal 35 at.-% aufweist.

6. Schichtsystem (1) nach Anspruch 5, wobei die Deckschicht (1a) aus Indium-Zinn-Oxid die Dotierung mit dem mindestens einen Element aus der Gruppe umfassend Kohlenstoff, Stickstoff, Bor, Fluor, Wasserstoff, Silizium, Titan, Zirkon, im Bereich von 0,1 bis 10 at.-% aufweist.

7. Bipolarplatte (2, 2') umfassend ein metallisches Substrat (2a) sowie ein Schichtsystem (1) nach einem der Ansprüche 1 bis 6, mit einem Aufbau der Bipolarplatte (2, 2') in der Reihenfolge:
metallisches Substrat (2a),
Unterschicht (1c),
Zwischenschicht(en) (1b),
Deckschicht (1a).

8. Bipolarplatte (2, 2') nach Anspruch 7, wobei das metallische Substrat (2a) aus Stahl gebildet ist.

9. Brennstoffzelle (10), insbesondere Sauerstoff-Wasserstoff-Brennstoffzelle, oder Elektrolyseur oder Redox-Flow-Zelle, umfassend mindestens eine Bipolarplatte (2, 2') nach Anspruch 7 oder 8.

10. Brennstoffzelle (10) nach Anspruch 9, umfassend mindestens eine Polymerelektrolytmembrane (7).

## Claims

1. A layer system (1) for coating a metal substrate (2a) to form a flow field plate (2, 2'), comprising at least one cover layer (1a) made of metal oxide, at least one intermediate layer (1b) supporting the cover layer (1a), and a lower layer (1c) supporting the intermediate layer(s) (1b),
wherein the cover layer (1a) is formed of indium tin oxide having an indium content in the range of 75 to 85 vol%, wherein the indium tin oxide is optionally doped with at least one element from the group comprising carbon, nitrogen, boron, fluorine, hydrogen, silicon, titanium and zirconium,
wherein the at least one intermediate layer (1b) is formed of titanium nitride and/or titanium carbide and/or titanium carbonitride and/or titanium niobium nitride and/or titanium niobium carbide and/or titanium niobium carbonitride and/or chromium nitride and/or chromium carbide and/or chromium carbonitride, and
wherein the lower layer (1c) is formed of titanium or a titanium-niobium alloy or chromium.

2. The layer system (1) according to claim 1, wherein the lower layer (1c) has a layer thickness in the range of 1 nm to 300 nm.

3. The layer system (1) according to any of the preceding claims, wherein the at least one intermediate layer (1b) has a layer thickness in the range of 0.1 µm to 3.0 µm.

4. The layer system (1) according to any of the preceding claims, wherein the cover layer (1a) has a layer thickness in the range of 0.01 µm to 15 µm.

5. The layer system (1) according to any of the preceding claims, wherein the cover layer (1a) made of indium tin oxide is doped with the at least one element from the group comprising carbon, nitrogen, boron, fluorine, hydrogen, silicon, titanium and zirconium of a maximum of 35 at%.

6. The layer system (1) according to claim 5, wherein the cover layer (1a) made of indium tin oxide is doped with the at least one element from the group comprising carbon, nitrogen, boron, fluorine, hydrogen, silicon, titanium and zirconium in the range of 0.1 to 10 at%.

7. A flow field plate (2, 2') comprising a metal substrate (2a) and a layer system (1) according to any of claims 1 to 6, having a structure of the flow field plate (2, 2') in this order:
metal substrate (2a),
lower layer (1c),
intermediate layer(s) (1b),
cover layer (1a).

8. The flow field plate (2, 2') according to claim 7, wherein the metal substrate (2a) is formed from steel.

9. A fuel cell (10), in particular oxygen-hydrogen fuel cell, or electrolyser or redox flow cell, comprising at least one flow field plate (2, 2') according to claim 7 or 8.

10. The fuel cell (10) according to claim 9, comprising at least one polymer electrolyte membrane (7).

## Revendications

1. Système stratifié (1) destiné à revêtir un substrat métallique (2a) pour former une plaque bipolaire (2, 2'), comprenant au moins une couche supérieure (1a) en oxyde métallique, au moins une couche intermédiaire (1b) portant la couche supérieure (1a) et une couche inférieure (1c) portant l'au moins une couche intermédiaire (1b),
la couche supérieure (1a) étant formée d'oxyde d'indium et d'étain comportant une proportion d'indium dans la plage de 75 à 85 % en volume, l'oxyde d'indium et d'étain étant éventuellement dopé avec au moins un élément du groupe comprenant le carbone, l'azote, le bore, le fluor, l'hydrogène, le silicium, le titane et le zircon,
l'au moins une couche intermédiaire (1b) étant formée de nitrure de titane et/ou de carbure de titane et/ou de carbonitrure de titane et/ou de nitrure de titane et de niobium et/ou de carbure de titane et de niobium et/ou de carbonitrure de titane et de niobium et/ou de nitrure de chrome et/ou de carbure de chrome et/ou de carbonitrure de chrome, et
la couche inférieure (1c) étant formée de titane ou d'un alliage de titane et de niobium ou de chrome.

2. Système stratifié (1) selon la revendication 1, dans lequel la couche inférieure (1c) présente une épaisseur de couche dans la plage de 1 nm à 300 nm.

3. Système stratifié (1) selon l'une quelconque des revendications précédentes, dans lequel l'au moins une couche intermédiaire (1b) présente une épaisseur de couche dans la plage de 0,1 µm à 3,0 µm.

4. Système stratifié (1) selon l'une quelconque des revendications précédentes, dans lequel la couche supérieure (1a) présente une épaisseur de couche dans la plage de 0,01 µm à 15 µm.

5. Système stratifié (1) selon l'une quelconque des revendications précédentes, dans lequel la couche supérieure (1a) en oxyde d'indium et d'étain présente le dopage avec l'au moins un élément du groupe comprenant le carbone, l'azote, le bore, le fluor, l'hydrogène, le silicium, le titane, le zircon, de 35 % atomiques au maximum.

6. Système stratifié (1) selon la revendication 5, dans lequel la couche supérieure (1a) en oxyde d'indium et d'étain présente le dopage avec l'au moins un élément du groupe comprenant le carbone, l'azote, le bore, le fluor, l'hydrogène, le silicium, le titane, le zircon, dans la plage allant de 0,1 à 10 % atomiques.

7. Plaque bipolaire (2, 2') comprenant un substrat métallique (2a) et un système stratifié (1) selon l'une quelconque des revendications 1 à 6, comportant une structure de la plaque bipolaire (2, 2') comprenant dans l'ordre :
le substrat métallique (2a),
la couche inférieure (1c),
l'au moins une couche intermédiaire (1b),
la couche supérieure (1a).

8. Plaque bipolaire (2, 2') selon la revendication 7, dans laquelle le substrat métallique (2a) est formé en acier.

9. Pile à combustible (10), en particulier pile à combustible oxygène-hydrogène, ou électrolyseur ou cellule redox, comprenant au moins une plaque bipolaire (2, 2') selon la revendication 7 ou 8.

10. Pile à combustible (10) selon la revendication 9, comprenant au moins une membrane électrolytique polymère (7).
